# EUROPÄISCHE PATENTANMELDUNG

(11) **EP 2 407 652 A1**
(43) Veröffentlichungstag der Anmeldung: **18.01.2012**
(21) Anmeldenummer: 10007334.5
(22) Anmeldetag: 15.07.2010
(51) Int. Cl.: F02C 7/18, F02C 9/18, F02C 9/52

(54) **Gasturbine mit einem Sekundärluftsystem und Verfahren zum Betreiben einer solchen Gasturbine**

(71) Anmelder: Siemens Aktiengesellschaft, 80333 München (DE)
(72) Erfinder: Ackenhausen, Harald, 46537 Dinslaken (DE); Benkler, Francois, Dr., 40880 Ratingen (DE); Brandenburg, Thomas, 40217 Düsseldorf (DE); Braun, Stefan, 47506 Neukirchen-Vluyn (DE); Buchal, Tobias, Dr., 40489 Düsseldorf (DE); Link, Marco, 47057 Duisburg (DE); Perez Ratmiroff, Omar Enrique, 40215 Düsseldorf (DE); Savilius, Nicolas, 45359 Essen (DE); Schneider, Oliver, Dr., 46487 Wesel (DE); Sieber, Uwe, 45476 Mülheim an der Ruhr (DE); Simon, Gerhard, 45239 Essen (DE); Tertilt, Marc, 45529 Hattingen (DE); Tietz, Klaus, 45239 Essen (DE); Voelker, Stefan, 47447 Moers (DE); Wagner, Michael, 46147 Oberhausen (DE)

(57) **Zusammenfassung**

Die Erfindung betrifft eine Gasturbine (10) und ein Verfahren zum Betreiben einer solchen, mittels welchem der Teillastbetrieb der Gasturbine (10) unter Einhaltung niedriger (CO)-Emissionen vergrößert werden kann, indem die einzelnen Kühlluftstränge (S) des Sekundärluftsystems (24) für den besagten niedrigen Teillastbetrieb kaskadisch um eine Stufe herabgeschaltet werden, so dass an der Kühlluftmündung (M) des betreffenden Kühlluftstrangs (S) Kühlluft mit einem höheren Druck bereitgestellt wird als der Druck derjenigen Kühlluft, welche bei höherer Teillast oder bei Nennbetrieb der Gasturbine (10) an der betreffenden Kühlluftmündung (M) bereitgestellt wird.

## Beschreibung

Die Erfindung betrifft eine Gasturbine gemäß dem Oberbegriff des Anspruchs 1. Ferner betrifft die Erfindung ein Verfahren zum Betreiben einer Gasturbine gemäß dem Oberbegriff des Anspruchs 7.

Eine Gasturbine mit einem Sekundärluftsystem ist beispielsweise aus der EP 1 528 238 A2 bekannt. Das bekannte Sekundärluftsystem weist eine stromab des Gasturbinenverdichters angeordnete Kühlluft-Entnahme auf. Mit Hilfe der entnommenen Kühlluft werden die Leitschaufeln der Turbine gekühlt. Dazu verzweigt sich das Sekundärluftsystem stromab der Entnahme in vier parallele Kühlluftstränge. Jedem dieser Kühlluftstränge ist eine zusätzliche gekühlte, angefeuchtete Kühlluft höheren Drucks über einen Kühlluftmischer zuführbar, um für die Turbinenleitschaufeln unterschiedlicher Turbinenstufen jeweils individuell angepasstes, bedarfsgerechtes Kühlmittel zur Verfügung stellen zu können, ohne dass ein ungebührender Verbrauch an vom Verdichter erzeugter Kühlluft eintritt.

Daneben ist aus der DE 10 2008 044 436 A1 ein weiteres Sekundärluftsystem einer Gasturbine bekannt, bei dem mit Hilfe eines externen Verdichters den einzelnen Kühlluftsträngen zusätzlich einen Teil der benötigten Kühlluft zugeführt werden kann. Der Einsatz eines externen Verdichters ist jedoch aufgrund des erhöhten Ausfallrisikos nachteilig.

Weiter ist bekannt, dass beim Betrieb der Gasturbine unterhalb ihres Auslegungspunkts, d. h. unterhalb der Nennlast, ein Luftüberschuss bei der Verbrennung des Brennstoffs auftreten kann. Je niedriger die von der Gasturbine zu erbringende Last ist, umso größer kann der Überschuss an vom angeschlossenen Verdichter zur Verbrennung bereitgestellter Luft sein. Dies führt dazu, dass in der Brennkammer die für die CO-Emissionen relevante Primärzonentemperatur (TPZ) der Flamme unter einen Minimalwert fallen kann. Dadurch werden verstärkt CO-Emissionen freigesetzt, was bei Vorhandensein von vorgegebenen Emissions-Grenzwerten den nutzbaren Betriebsbereich der Gasturbine bei Teillast begrenzen kann. Um diesem Problem zu begegnen, ist aus der DE 10 2008 044 442 A1 ein Gasturbinensystem und eine darin beschriebene Betriebsweise bekannt. Das aus der DE 10 2008 044 442 A1 bekannte Betriebsverfahren ist insbesondere für einen Betrieb bei Niedriglasten geeignet. Das Gasturbinensystem enthält eine Anzahl von Einlassschaufeln, einen Verdichter, eine Turbine und ein Luftbewegungssystem. Um die Emission aus dem Gasturbinensystem unter einem vorbestimmten Pegel zu halten, wird die von dem Verdichter zur Verbrennung üblicherweise bereitgestellte verdichtete Luft mit Hilfe eines Bypass umgeleitet. Der Bypass mündet dabei entweder stromauf der Entnahmestelle, d. h. in oder vor dem Verdichter oder auch stromab, d. h. in der Turbine. Es hat sich doch herausgestellt, dass das in der DE 10 2008 044 442 A1 gezeigte Gasturbinensystem und das beschriebene Betriebsverfahren den Wirkungsgrad der Gasturbine unnötig weit verringert.

Aufgabe der Erfindung ist die Bereitstellung einer eingangs genannten Gasturbine, die trotz eines Teillastbetriebs einen vergleichsweise hohen Wirkungsgrad aufweist, ohne dass unnötig hohe Emissionen erzeugt werden. Eine weitere Aufgabe der Erfindung ist es, ein Verfahren zum Betreiben einer Gasturbine anzugeben, bei dem im Teillastbetrieb eine unzulässig hohe Konzentration an ungewünschten Emissionen weitestgehend vermieden werden kann.

Die auf die Gasturbine gerichtete Aufgabe wird mit einer solchen gelöst, welche gemäß den Merkmalen des Anspruchs 1 ausgestaltet ist. Die erfindungsgemäße Gasturbine weist einen Verdichter, zumindest eine Brennkammer zur Erzeugung eines Heißgases, eine mehrere Turbinenschaufelkränze aufweisende Turbine und ein Sekundärluftsystem auf. Das Sekundärluftsystem umfasst zumindest eine erste Kühlluftpassage, die eine am Verdichter angeordnete Kühlluftentnahme mit einer an einem ersten Bauteil angeordneten ersten Kühlluftmündung zur Zuführung von Kühlluft zu dem von Heißgas beaufschlagbaren ersten Bauteil verbindet sowie eine am oder stromab des Verdichters angeordnete zweite Kühlluftentnahme. Erfindungsgemäß ist vorgesehen, dass ein erstes Stellorgan in der ersten Kühlmittelpassage vorgesehen ist, mittels dem anstelle der ersten Kühlluftentnahme die zweite Kühlluftentnahme mit der ersten Kühlluftmündung verbindbar ist.

Ähnlich wie beim Stand der Technik liegt der Lösung zugrunde, dass zur Reduzierung von CO-Emissionen im Teillastbetrieb Verdichterluft um die Brennkammer herumgeleitet werden soll, damit diese nicht an der Verbrennung teilnimmt. Dadurch kann die Verbrennungstemperatur in der Brennkammer zumindest so hoch gehalten werden, dass die für CO-Emissionen relevante Primärzonentemperatur einen gewünschten Minimalwert nicht unterschreitet. Die vor der Verbrennung entnommene Verdichterluft soll dabei jedoch nicht einfach in den Abgaskanal der Gasturbine abgeblasen werden, sondern erfindungsgemäß der Turbine möglichst zugeführt werden. Dadurch kann der um die Verbrennung geleitete Anteil an Kühlluft noch arbeitsleistend in der Turbine entspannt werden. So kann der Wirkungsgradverlust vergleichsweise klein gehalten werden.

Dies wird erreicht, indem die Erfindung den Kühlluftverbrauch der Turbine absichtlich erhöht. Hierzu ist vorgesehen, dass durch Umschaltung der Kühlluftkonfiguration die einzelnen Kühlluftverbraucher, sprich Heißgasbauteile, mit Kühlluft eines höheren Druckniveaus versorgt und gekühlt werden, als es normalerweise, d. h. im Nennbetrieb, der Fall ist. Dadurch durchströmt mehr Luftmasse die Kühlluftverbraucher und weniger Luftmasse in die bzw. durch die Gasturbinen-Brenner. Somit steigt bei gleichem Brennstoffmassenstrom, also ungefähr gleicher Gasturbinen-Leistung, die zentrale Flammentemperatur und die Primärzonentemperatur, wodurch die CO-Emissionen sinken. Erfindungsgemäß wird die umgeleitete Kühlluft der Turbine wieder zugesetzt und geht dem Prozess dadurch nicht verloren. Nur eine vergleichsweise geringe Menge wird in den Abgaskanal abgeblasen. Würde die umgeleitete, dem Verbrennungsprozess auch vorenthaltene Luftmenge vollständig in den Abgaskanal - also hinter die Turbinenstufen - abgeblasen - wie im Stand der Technik beispielsweise vorgeschlagen -, ergäbe sich im Vergleich zu der erfindungsgemäßen Umschaltung ein höherer Wirkungsgradverlust, da auch die umgeleitete Luftmenge vor dem Abblasen mit hohem Energieaufwand verdichtet wurde.

Dabei werden nicht gleichzeitig zwei Kühlluftentnahmen einer Kühlluftmündung zugeschaltet, sondern es wird stets nur eine der beiden betroffenen Kühlluftentnahmen mit der betreffenden Kühlluftmündung verbunden. Dadurch wird eine Zirkulation von Kühlluft zwischen den beiden betroffenen Kühlluftentnahmen wirksam unterbunden, was ansonsten aerodynamische Verluste im Verdichter im Bereich derjenigen Kühlluftentnahme verursacht hätte, an welcher ein geringerer statischer Druck im Verdichter vorherrscht.

Die auf das Verfahren gerichtet Aufgabe wird mit einem solchen gelöst, bei dem im Nennbetrieb ein in einer ersten Kühlluftpassage eines Sekundärluftsystems angeordnetes Stellorgan eine erste Kühlluftentnahme mit einer ersten Kühlluftmündung verbindet, wobei erfindungsgemäß bei Unterschreiten einer vorbestimmten Teillast das Stellorgan so geschaltet wird, dass dieses eine zweite Kühlluftentnahme mit der ersten Kühlluftmündung zur Zuführung von Kühlluft mit einem höheren Kühlluftdruck als von der ersten Kühlluftentnahme bereitgestellt verbindet. Die bei der Durchführung des Verfahrens auftretenden Vorteile entsprechen den (die Vorrichtung betreffenden) Vorteilen, welche mit der Vorrichtung eintreten.

Vorteilhafte Ausgestaltungen sind in den Unteransprüchen angegeben.

Gemäß einer weiteren vorteilhaften Ausgestaltung ist die zweite Kühlluftentnahme Teil einer zweiten Kühlluftpassage, die die zweite Kühlluftentnahme mit einer an einem zweiten Bauteil angeordneten Kühlluftmündung zur Zuführung von Kühlluft zu dem von Heißgas beaufschlagbaren zweiten Bauteil verbindet, wobei die ersten und zweiten Bauteile unterschiedlichen Turbinenschaufelkränzen zugeordnet sind. Nach einer weiteren vorteilhaften Ausgestaltung umfasst die Gasturbine eine dritte Kühlluftpassage, die eine am oder stromab des Verdichters angeordnete dritte Kühlluftentnahme mit einer an einem dritten Bauteil angeordneten dritten Kühlluftmündung zur Zuführung von Kühlluft zu dem von Heißgas beaufschlagbaren dritten Bauteil verbindet, wobei ein zweites Stellorgan in der zweiten Kühlmittelpassage vorgesehen ist, mittels dem anstelle der zweiten Kühlluftentnahme die dritte Kühlluftentnahme mit der zweiten Kühlluftmündung verbindbar ist.

Selbstverständlich kann vorteilhafterweise eine dritte Kühlluftpassage und ggf. dieser entsprechend eine vierte Kühlluftpassage sowie noch weitere Kühlluftpassagen vorgesehen sein, die entsprechend der oben genannten Kühlluftpassagen ausgestaltet sind, um den betreffende Kühlluftmündung wechselweise mit einer von zwei Kühlluftentnahmen zu verbinden.

Allen vorteilhaften Ausgestaltungen ist gemein, dass insbesondere bei geringem Teillastbetrieb der Gasturbine die dem Verdichter entnommene Kühlluft mit einem höheren Kühlluftdruck demjenigen Bauteil zugeführt wird, das ansonsten, beispielsweise im Nennbetrieb, mit einer Kühlluft niedrigeren Kühlluftdrucks und Kühllufttemperatur versorgt wird. Durch die Umschaltung im Sekundärluftsystem werden kaskadisch alle beteiligten Kühlluftentnahmen und Kühlluftmündungen derartig umgeschaltet, dass die den Kühlluftmündungen zugeordneten Bauteile, insbesondere während des niedrigen Teillastbetriebs, mit einer Kühlluft versorgt werden, deren Druck einen vergleichsweise großen Abstand zu dem an der Stelle der Bauteile auftretenden Heißgasdruck aufweisen. Durch die vergrößerte Druckdifferenz werden die Bauteile zwar übermäßig gekühlt, jedoch werden die bei der Verbrennung auftretenden Emissionen aufgrund einer verringerten, zur Erzeugung des Heißgases beitragenden Luftmenge gering gehalten.

Um die Umschaltung zu bewerkstelligen, ist vorzugsweise das betreffende Stellorgan als ein 3/2-Wege-Ventil ausgestaltet. Zusätzlich kann in der betreffenden Kühlluftpassage stromab des jeweiligen Stellorgans ein Regelventil vorgesehen sein. Bei Vorhandensein mehrerer Kühlluftpassagen ist es auch von Vorteil, wenn die erste Kühlluftentnahme mit einer in einem Abgaskanal der Gasturbine mündenden Bypassmündung verbindbar ist.

Weitere Vorteile, Merkmale und Eigenschaften der Erfindung werden anhand eines bevorzugten Ausführungsbeispiels in der folgenden Zeichnung näher erläutert. Es zeigt die einzige Figur:

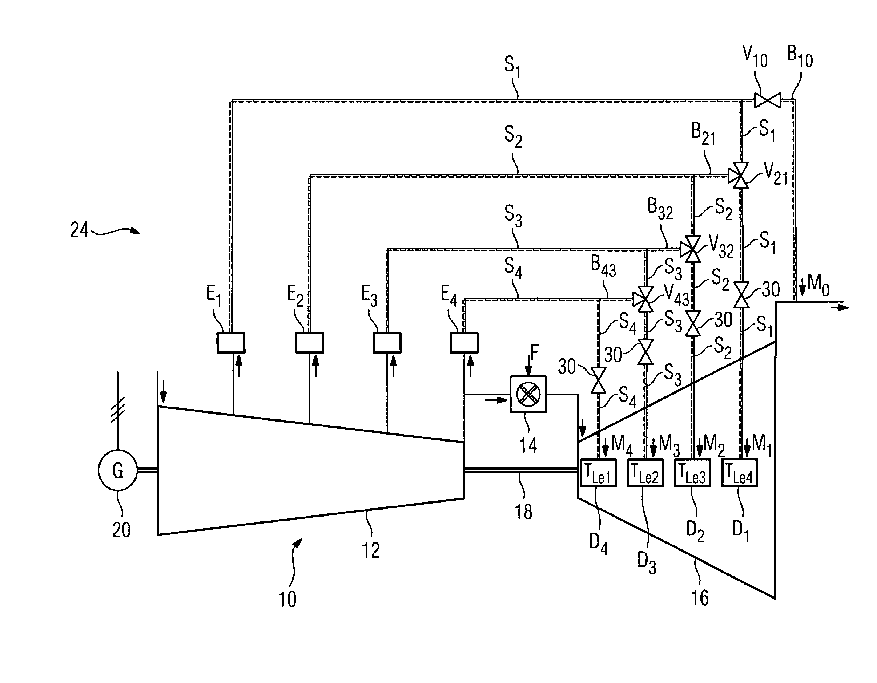

- FIG 1: in schematischer Darstellung eine Gasturbine mit einem vier Kühlluftstränge aufweisenden Sekundärluftsystem.

Die einzige Figur zeigt schematisch eine Gasturbine 10 umfassend einen Verdichter 12, eine Brennkammer 14 sowie eine Turbine 16. An einem Rotor 18 der Gasturbine 10 ist eine elektrische Maschine in Form eines Generators 20 zur Erzeugung von elektrischer Energie angekoppelt. Bei der Gasturbine 10 handelt es sich um eine stationäre Gasturbine mit axialer Durchströmung. Dementsprechend ist der Verdichter 12 als axial durchströmbarer Verdichter ausgebildet mit einer Vielzahl von aufeinander folgenden Verdichterstufen, meist zehn oder mehr Verdichterstufen, die sich jeweils aus einem Laufschaufelkranz und einem stromab davon unmittelbar benachbarten Leitschaufelkranz zusammensetzen. In dazu analoger Weise umfasst die Turbine 16 vier Turbinenstufen. Jede Turbinenstufe setzt sich aus einem Leitschaufelkranz und einem unmittelbar stromab benachbarten Laufschaufelkranz zusammen, so dass die Kränze von Leitschaufeln und Laufschaufeln sich auch im Strömungspfad der Turbine 16 abwechseln. Die zwischen dem Verdichter 12 und der Turbine 16 angeordnete Brennkammer 14 ist ebenso lediglich schematisch dargestellt. In der Brennkammer 14 wird ein Brennstoff F zu einem Heißgas verbrannt. Bei der Brennkammer 14 kann es sich um eine ringförmige Brennkammer handeln. Es ist jedoch auch möglich, dass die Brennkammer 14 eine Vielzahl von, beispielsweise zwölf Rohrbrennkammern umfasst, die jeweils gleichmäßig um den Rotor 18 der Gasturbine verteilt sind. Im letztgenannten Fall münden alle Rohrbrennkammern in einem ringförmigen Strömungspfad der Turbine 16, in welchem die feststehenden Leitschaufeln und die am Rotor befestigten Laufschaufeln strahlenförmig hineinragen.

Das Sekundärluftsystem 24 umfasst im dargestellten Ausführungsbeispiel insgesamt vier Kühlluftpassagen S₁, S₂, S₃, S₄-Die Kühlluftpassagen S₁, S₂, S₃, S₄ werden auch als Kühlluftstränge bezeichnet. Selbstverständlich ist es möglich, dass die Gasturbine mehr als vier oder weniger als vier Kühlluftpassagen aufweist. Jede Kühlluftpassage S umfasst eine äußere, also gehäuseseitige Kühlluftentnahme E und eine Kühlluftmündung M. Insgesamt weist somit das gezeigte Sekundärluftsystem 24 vier Kühlluftentnahmen E₁, E₂, E₃, E₄ auf, die über die betreffende Kühlluftpassage S₁, S₂, S₃, S₄ mit der ihr jeweils zugeordneten Kühlluftmündung M1, M₂, M₃, M₄ verbunden sind. Jede Kühlluftmündung M₁, N₂, M₃, M₄ mündet dazu an einem Kühlluftanschluss eines entsprechenden Bauteils D₁, D₂, D₃, D₄. Jedes dieser Bauteile D₁, D₂, D₃, D₄ ist dem von der Brennkammer 14 erzeugten Heißgas ausgesetzt und ist zum Erreichen einer vorbestimmten Lebensdauer mit Kühlluft in bekannter Art und Weise zu kühlen.

Anstelle oder zusätzlich der Kühlung der Bauteile D₁, D₂, D₃, D₄ kann auch vorgesehen sein, dass die durch das Sekundärluftsystem 24 bereitgestellte Kühlluft auch zur Sperrung von Spalten eingesetzt werden kann, welche zwischen den Bauteilen D₁, D₂, D₃, D₄ vorhanden sind. Durch die Sperrung kann das Eindringen von Heißgas in den Spalt vermieden werden, was ansonsten zur Beschädigung der Bauteile D₁, D₂, D₃, D₄ führen kann. Unabhängig davon, ob die über die Kühlluftmündungen M₁, M₂, M₃, M₄ bereitgestellte Kühlluft nun zur Kühlung von Bauteilen D1, D₂, D₃, D₄ oder zur Sperrung von Spalten verwendet wird, ist erforderlich, dass diese Kühlluft zum Zeitpunkt ihres Eintretens in den Heißgaspfad der Turbine einen Druck aufweist, welcher zumindest geringfügig größer ist als der Druck des Heißgases an der entsprechenden Stelle.

Um eine geringe Druckdifferenz zu erreichen, verfügt jede Kühlluftpassage S₁, S₂, S₃, S₄ über Regelventile 30. Dieser Differenzdruck wird auch "back flow margin" genannt und beträgt in der Regel in etwa nur 1 bar. Prinzipiell wird jedoch der Kühlluftdruck stets so geregelt, dass nur ein vergleichsweise geringer Differenzdruck vorhanden ist, um einen besonders geringen Verbrauch an Kühlluft zu gewährleisten.

Die Bauteile D₁, D₂, D₃, D₄ können einerseits als Leitschaufeln und/oder Laufschaufeln der entsprechenden Turbinenkränze ausgebildet sein. Andererseits können sie auch als sogenannte Führungsringsegmente ausgebildet sein, welche den Spitzen der Laufschaufeln gegenüber liegen und dabei die äußere Begrenzungswand des Heißgaskanals im Bereich der Laufschaufeln darstellen. Ferner können die Bauteile D₁, D₂, D₃, D₄ auch als Brennkammer-Wandelemente ausgebildet sein.

Die Kühlluftentnahmen E₁, E₂, E₃ sind entlang des Verdichters 12 axial verteilt. Die Kühlluftentnahme E₁ ist im vorderen, bezogen auf die Verdichterluft einströmseitigen Abschnitt des Verdichters 12 angeordnet. Die Kühlluftentnahme E₂ ist in etwa im mittleren Abschnitt des Verdichters 12 angeordnet und die Kühlluftentnahme E₃ ist im hinteren Teil des Verdichters 12 platziert. Die Kühlluftentnahme E₄ ist stromab des Verdichters 12 angeordnet. Die an der Kühlluftentnahme E₁ entnommene Kühlluft weist somit von allen Kühllüften den geringsten Kühlluftdruck und die geringste Kühllufttemperatur auf. Die an der Kühlluftentnahme E₂ entnommene Kühlluft weist einen Druck auf, welcher höher ist als der Druck der an der Kühlluftentnahme E₁ entnommenen Kühlluft, jedoch ist dieser Druck geringer als der Druck derjenigen Kühlluft, welche an der Kühlluftentnahme E₃ entnommen wird. Die an der Kühlluft-entnahme E₄ entnommene Kühlluft weist bekanntermaßen den höchsten Kühlluftdruck auf und wird an derjenigen Stelle der Turbine eingesetzt, an welcher das Heißgas ebenso den höchsten Druck aufweist, jedoch unter Berücksichtigung des gewünschten Differenzdrucks "back flow margin". Bekanntermaßen wird die an der Kühlluftentnahme E₄ entnommene Kühlluft, auch Verdichterendluft genannt, zur Kühlung der Leitschaufeln der ersten Turbinenstufe verwendet und ggf. auch zur Kühlung der Führungsringsegmente der ersten Turbinenstufe. In analoger Weise kann die an der Kühlluftentnahmestelle E₃ entnommene Kühlluft über die Kühlluftpassage S₃ beispielsweise den Leitschaufeln der zweiten Turbinenstufe zugeführt werden. Dies gilt in analoger Weise auch für die an der Kühlluftentnahmestelle E₂ bzw. Kühlluftentnahmestelle E₁ entnommene Kühlluft, welche dementsprechend den Turbinenschaufeln oder Führungsringen der dritten Turbinenstufe bzw. der vierten Turbinenstufe somit zuführbar ist.

Die erfindungsgemäße Gasturbine weist im dargestellten Ausführungsbeispiel zumindest drei Kühlluftbrücken 8₄₃, B₃₂, B₂₁ sowie einen Bypass B₁₀ auf. Einströmseitig ist jede Kühlluftbrücke B₄₃, B₃₂, B₂₁ mit der ihr zugeordneten Kühlluftpassage S₄, S₃ bzw. S₂ verbunden, was auch aus der Indizierung des Bezugszeichens hervorgeht. Ausströmseitig sind die Kühlluftbrücken B₄₃, B₃₂, B₂₁ jeweils mit einem 3/2-Wege-Ventil verbunden, die in den anderen Kühlluftpassagen S₃, S₂, S₁ angeordnet sind. Die Ventile V₄₃, V₃₂, V₂₁ sind als Stellorgane so ausgestaltet, dass sie jeweils der ihr zugeordneten Kühlluftmündung M₃ , M₂ , M₁ eine von zwei Kühlluftentnahmen E₄ bzw. E₃; E₃ bzw. E₂; E₂ bzw. E₁; zuschalten können. Ferner ist ein Ventil V₁₀ im Bypass B₁₀ vorgesehen mittels dem die Kühlluftpassage S₁ einer Bypassmündung M₀ zugeschaltet werden kann.

Im Nennbetrieb der Gasturbine und ggf. auch im Teillastbetrieb, insbesondere bei größerer Teillast, sind die Ventile V₄₃, V₃₂, V₂₁ und V₁₀ so geschaltet, dass die Kühlluftpassage S₄ die Kühlluftentnahme E₄ mit der Kühlluftmündung M₄ verbindet, die Kühlluftpassage S₃ die Kühlluftentnahme E₃ mit der Kühlluftmündung M₃, die Kühlluftpassage S₂ die Kühlluftentnahme E₂ mit der Kühlluftmündung M₂ und die Kühlluftpassage S₁ die Kühlluftentnahme E₁ mit der Kühlluftmündung M₁. Sinkt jedoch die vom Generator 20 zu erbringende bzw. vom Netz abgefragte elektrische Leistung unter ein bestimmtes Niveau, sodass von einem niedrigen Teillastbetrieb gesprochen werden kann, so sinkt auch die von der Gasturbine zur Verfügung gestellte bzw. an der Welle abgetriebene Leistung. Um dabei die durch die Verbrennung des Brennstoffs F erzeugten CO-Emission auf einem vergleichsweise niedrigen Pegel zu halten, ist es bekannt, die am einströmseitigen Ende des Verdichters 12 vorgesehenen verstellbaren Verdichtereinlassleitschaufeln zu schließen. Für den Fall, dass eine derartig niedrige Leistung, beispielsweise 40 % der Nennlast der Gasturbine, abgefragt wird, dass ein weiteres Verschließen der verstellbaren Leitschaufeln nicht möglich ist, ohne den Pegel erlaubter CO-Emissionen zu überschreiten, soll die vom Verdichter in einem zu großen Maßstab angesaugte und verdichtete Luft mit Hilfe des erfindungsgemäßen Sekundärluftsystems 24 in vermehrtem Maße um die Brennkammer 14 geleitet werden. Dazu ist vorgesehen, die Ventile V₄₃, V₃₂, V₂₁ und V₁₀ synchron umzuschalten, so dass die Kühlluftentnahme E₄ über die Brücke B₄₃ mit der Kühlluftmündung M₃ strömungstechnisch verbunden ist, die Kühlluftentnahme E₃ über die Brücke B₃₂ mit der Kühlluftmündung M₂ und die Kühlluftentnahme E₂ über die Brücke B₂₁ mit der Kühlluftmündung M₁ und die Kühlluftentnahme E₁ über die Brücke B₁₀ mit der Bypassmündung M₀. Mit anderen Worten: jede betreffende Kühlluftentnahme E₄, E₃, E₂, E₁ wird kaskadisch um eine Stufe der nächst niedrigeren Kühlluftmündung M₃, M₂, M₁, M₀ aufgeschaltet. Dies hat zur Folge, dass die an den Kühlluftmündungen M₃, M₂, M₁ angeordneten Bauteile D₃, D₂ , D₁ dann mit einer Kühlluft versorgt werden, die einen höheren Druck aufweist als diejenige Kühlluft, welche im Nennbetrieb der Gasturbine 10 für diese bereitgestellt wird. Dadurch erhöht sich der Differenzdruck, was gleichzeitig den Kühlluftverbrauch in der Turbine 16 signifikant erhöht. Da aber der Verdichter 12 in diesem Fall eine unveränderte Luftmenge bereitstellt, sinkt durch den erhöhten Kühlluftverbrauch die der Verbrennung zur Verfügung stehende Luftmenge. Dies hat zur Folge, dass die relevante Primärzonentemperatur der Flamme nicht unter einen minimalen Wert gesenkt wird. Folglich kann die in der Brennkammer stattfindende Verbrennung bei einer Temperatur ablaufen, bei der ein vergleichsweise geringer Anteil an CO-Emissionen entsteht. Dadurch wird erreicht, dass die Gasturbine über einen größeren Teillastbereich mit vergleichsweise geringen CO-Emissionen betrieben werden kann. Außerdem führt dies zu einem Wirkungsgradvorteil gegenüber anderen Methoden, bei dem über einen in den Abgaskanal mündenden Bypass Verdichterendluft abgeführt wird. Ein weiterer Vorteil liegt darin, dass die vorgeschlagenen Änderungen ohne größeren konstruktiven Aufwand auch für bereits bestehende Gasturbinen anwendbar sind. Dementsprechend kann vergleichsweise preiswert der Teillastbereich einer bestehenden Gasturbine vergrößert werden. Dazu sind lediglich die in den Kühlluftpassagen S₁, S₂, S₃, S₄ vorgesehenen 3/2-Wege-Ventile V₄₃, V₃₂, V₂₁, V₁₀ und die Kühlluftbrücken B₄₃, B₃₂, B₂₁, nachzurüsten.

De facto wird das Sekundärluftsystem 24 somit in zwei unterschiedlichen Zuständen betrieben. In einem Standardbetriebs-Zustand ist die jeweilige Kühlluftentnahme E₁, E₂, E₃, E₄ über die Kühlluftpassage S₁, S₂, S₃, S₄ mit der ihr üblicherweise zugeordneten Kühlluftmündung M₁, M₂, M₃, M₄ strömungstechnisch gekoppelt ist. In diesem Zustand befindet sich das Sekundärluftsystem 24 bei Nennlastbetrieb und auch bei größerem Teillastbetrieb. In einem CO-Reduktions-Zustand, in welchen bei niedriger Teillast umgeschaltet wird, werden die Kühlluftentnahmen E₁, E₂, E₃, E₄ einer Kühlluftmündung M₀, M₁, M₂, M₃ mit niedriger Ordnungsnummer (Indizierung) zugeschaltet. Vorzugsweise erfolgt die Umschaltung stets durch synchrones Umschalten aller 3/2-Wege-Ventile V₄₃, V₃₂, V₂₁ und V₁₀. Im CO-Reduktions-Zustand weisen die entsprechenden Bauteile D₁, D₂, D₃, D₄ einen wesentlich erhöhten Differenzdruck auf, was zu dem gewünschten überhöhten Kühlluftverbrauch führt. Im CO-Reduktions-Zustand sind die Regelventile 30 stets voll geöffnet. Kern der Erfindung ist demnach eine Gasturbine 10 und ein Verfahren zum Betreiben dieser, bei dem einer betreffenden Kühlluftmündung M eine andere Kühlluftentnahme E zugeschaltet werden kann, welche andere Kühlluftentnahme E Kühlluft mit einem höheren Druck bereitstellt als diejenige Kühlluftentnahme E, welche zuvor mit der betreffenden Kühlluftmündung M verbunden war. Die Umschaltung im Sekundärluftsystem 24 erfolgt vorzugsweise erst so spät wie möglich, also bei niedriger oder sehr niedriger Teillast der Gasturbine 10.

Selbstverständlich ist es auch möglich, nicht alle Ventile V₄₃, V₃₂, V₂₁, V₁₀ gleichzeitig zu schalten, sondern nur eins oder einige dieser Ventile V₄₃, V₃₂, V₂₁, V₁₀. Dann existieren für das Sekundärluftsystem 24 mehrere Betriebszustände.

Insgesamt wird mit der Erfindung eine Gasturbine 10 und ein Verfahren zum Betreiben einer solchen angegeben, mittels welchem der Teillastbetrieb der Gasturbine 10 unter Einhaltung niedriger CO-Emissions-Grenzwerte vergrößert werden kann, indem die einzelnen Kühlluftstränge S des Sekundärluftsystems 24 für den besagten niedrigen Teillastbetrieb kaskadisch um eine Stufe herabgeschaltet werden, so dass an der Kühlluftmündung M des betreffenden Kühlluftstrangs S Kühlluft mit einem höheren Druck bereitgestellt wird als der Druck derjenigen Kühlluft, welche bei höherer Teillast oder bei Nennbetrieb der Gasturbine 10 an der betreffenden Kühlluftmündung M bereitgestellt wird.

## Patentansprüche

1. Gasturbine (10) mit einem Verdichter (12), zumindest einer Brennkammer (14) zur Erzeugung eines Heißgases, einer mehrere Turbinenschaufelkränze aufweisenden Turbine (16) und einem Sekundärluftsystem (24), welches umfasst:
eine erste Kühlluftpassage (S₁), die eine am Verdichter (12) angeordnete erste Kühlluftentnahme (E₁) mit einer an einem ersten Bauteil (D₁) angeordneten ersten Kühlluftmündung (M₁) zur Zuführung von Kühlluft zu dem von Heißgas beaufschlagbaren ersten Bauteil (D₁) verbindet,
eine am oder stromab des Verdichters (12) angeordnete zweite Kühlluftentnahme (E₂),
**dadurch gekennzeichnet, dass**
ein erstes Stellorgan (V₂₁) in der ersten Kühlmittelpassage (S₁) vorgesehen ist, mittels dem anstelle der ersten Kühlmittelentnahme (E₁) die zweite Kühlluftentnahme (E₂) mit der ersten Kühlluftmündung (M₁) verbindbar ist.

2. Gasturbine (10) nach Anspruch 1,
bei der die zweite Kühlluftentnahme (E₂) Teil einer zweiten Kühlluftpassage ist (S₂), die eine die zweite Kühlluftentnahme (E₂) mit einer an einem zweiten Bauteil (D₂) angeordneten zweiten Kühlluftmündung (M₂) zur Zuführung von Kühlluft zu dem von Heißgas beaufschlagbaren zweiten Bauteil (D₂) verbindet,
wobei die ersten und zweiten Bauteile (D₁,D₂) unterschiedlichen Turbinenschaufelkränzen zugeordnet sind.

3. Gasturbine (10) nach Anspruch 1 oder 2,
umfassend,
eine dritte Kühlluftpassage (S₃), die eine am oder stromab des Verdichters (12) angeordnete dritte Kühlluftentnahme (E₃) mit einer an einem dritten Bauteil (D₃) angeordneten dritten Kühlluftmündung (M₃) zur Zuführung von Kühlluft zu dem von Heißgas beaufschlagbaren dritten Bauteil (D₃) verbindet, wobei ein zweites Stellorgan (V₃₂) in der zweiten Kühlmittelpassage (S₂) vorgesehen ist, mittels dem anstelle der zweiten Kühlluftentnahme (E₂) die dritte Kühlluftentnahme (E₃) mit der zweiten Kühlluftmündung (M₂) verbindbar ist.

4. Gasturbine (10) nach Anspruch 1, 2 oder 3,
umfassend
eine vierte Kühlluftpassage (S₄), die eine am oder stromab des Verdichters (12) angeordnete vierte Kühlluftentnahme (E₄) mit einer an einem vierten Bauteil (D₄) angeordneten vierten Kühlluftmündung (M₄) zur Zuführung von Kühlluft zu dem von Heißgas beaufschlagbaren vierten Bauteil (D₄) verbindet,
wobei ein drittes Stellorgan (V₄₃) in der dritten Kühlmittelpassage (S₃) vorgesehen ist, mittels dem anstelle der dritten Kühlluftentnahme (E₃) die vierte Kühlluftentnahme (E₄) mit der dritten Kühlluftmündung (M₃) verbindbar ist.

5. Gasturbine (10) nach einem der Ansprüche 1 bis 4,
bei dem die erste Kühlluftentnahme (E₁) mit einer in einem Abgaskanal der Gasturbine (10) mündenden Bypassmündung (Mo) verbindbar ist.

6. Gasturbine (10) nach einem der Ansprüche 1 bis 5,
bei der in der betreffenden Kühlluftpassage (S₁, S₂, S₃, S₄) stromab des jeweiligen Stellorgans (V₂₁,V₃₂,V₄₃) ein Regelventil (30) vorgesehen ist.

7. Verfahren zum Betreiben einer Gasturbine (10) nach einem der vorangehenden Ansprüche,
bei dem im Nennbetrieb ein in einer ersten Kühlluftpassage (S1) eines Sekundärluftsystems (24) angeordnetes Stellorgan (V₂₁) eine erste Kühlluftentnahme (E₁) mit einer ersten Kühlluftmündung (M₁) verbindet,
**dadurch gekennzeichnet, dass**
bei einer betreffenden Kühlluftmündung (M₁, M₂, M₃, M₄) eine andere Kühlluftentnahme (E₁, E_{Z}, E₃, E₄) zugeschaltet wird, welche andere Kühlluftentnahme (E₁, E₂, E₃, E₄) Kühlluft mit einem höheren Kühlluftdruck bereitstellt als diejenige Kühlluftentnahme (E₁, E₂, E₃, E₄) , welche zuvor mit der betreffenden Kühlluftmündung ( M_{1,} M₂, M₃, M₄) verbunden war.

8. Verfahren nach Anspruch 7,
bei dem im Teillastbetrieb das Stellorgan (V₂₁) die erste Kühlluftentnahme (E₁) von der ersten Kühlluftmündung (M₁) trennt.

9. Verfahren nach Anspruch 7 oder 8,
bei der erst bei vergleichsweise niedriger Teillast das Stellorgan (V₂₁) so geschaltet wird, dass dieses eine zweite Kühlluftentnahme (E₂) mit der ersten Kühlluftmündung (M₁) zur Zuführung von Kühlluft mit einem höheren Kühlluftdruck als von der ersten Kühlluftentnahme (E₁) bereitgestellt, verbindet.

10. Verfahren nach einem der Ansprüche 7 bis 9,
bei dem bei Unterschreiten einer vorbestimmten Teillast das Stellorgan (V₂₁) so geschaltet wird, dass dieses eine zweite Kühlluftentnahme (E₂) mit der ersten Kühlluftmündung (M₁) zur Zuführung von Kühlluft mit einem höheren Kühlluftdruck als von der ersten Kühlluftentnahme (E₁) bereitgestellt verbindet.
